# EUROPEAN PATENT APPLICATION

(11) **EP 2 037 165 A2**
(43) Date of publication of application: **18.03.2009**
(21) Application number: 08252655.9
(22) Date of filing: 08.08.2008
(51) Int. Cl.: F16L 41/03

(54) **Manifold apparatus**

(30) Priority: 10.08.2007 GB 0715637
(71) Applicant: BRIGHTWELL DISPENSERS LIMITED, Newhaven, East Sussex BN9 0JF (GB)
(72) Inventor: Rossall, Jeremy Mark, Eastbourne east Sussex BN21 2BQ (GB)
(74) Representative: Johnstone, Douglas Ian

(57) **Abstract**

Manifold apparatus comprising a manifold body (2) and a plurality of fluid adapters (3), in which the manifold body (2) comprises a primary fluid inlet (4), one or more secondary fluid inlets and a fluid outlet, in which the one or more secondary fluid inlets (5,6) and the fluid outlet are provided with the first part of a connection means, in which the plurality of fluid adapters (3) are provided with the second part of said connection means and are adapted to be releasably fitted to the one or more secondary fluid inlets and/or the fluid outlet, and in which the primary fluid inlet (4) is provided with the second part of said connection means and is adapted to be releasably fitted to the fluid outlet of another manifold body (2) with which it is usable.

## Description

This invention relates to manifold apparatus for use particularly, but not exclusively, to mix chemicals and water for use in industrial washing machines.

Domestic and industrial dishwashers and laundry washing machines use one or more different chemical substances to wash and rinse the objects placed in them. Such chemical substances can be detergents, soaps, rinse aids and so on, and are usually provided in a concentrated form to be diluted in water. In most machines these chemical substances are placed in a tray or tank and are circulated into the washing system via internal plumbing. Each particular substance is circulated at predetermined intervals according to a washing and rinsing cycle.

However, the quantity of chemical substance used is not usually well controlled, and the same amount is often provided each time, when different wash cycles actually require differing amounts. These problems are exacerbated when the machines are industrial in size, and when large numbers of such machines are taken into consideration. Therefore, it is known to provide industrial washing machines with improved aftermarket chemical dispensing systems.

Such systems comprise external pumps provided with a source of chemical, often from a large container. The pumps are integrated into the machine's control system so they operate when the machine requires an input of a chemical substance. The chemicals are mixed with water to dilute them before they are provided to the machine.

In order to facilitate this arrangement various bits of plumbing are required, in particular to direct the chemicals to the water supply, and then to direct the mixture to the machine. In addition, a number of valves are required to prevent back flow of the mixture down the chemical lines or down the water supply line. As such, quite complex plumbing must be constructed from various components, each of which needs to suit the washing machine in question. The arrangement may become even more complex if space is limited.

A further problem is that it is not possible to quickly and easily change the arrangement, which may be necessary if different types of chemicals are provided, in particular if they require larger line sizes. Changes are also required if further chemical substance inlets are to be added into the system.

The present invention is intended to overcome some of the above problems.

Therefore, according to the present invention manifold apparatus comprises a manifold body and a plurality of fluid adapters, in which the manifold body comprises a primary fluid inlet, one or more secondary fluid inlets and a fluid outlet, in which the one or more secondary fluid inlets and the fluid outlet are provided with the first part of a connection means, in which the plurality of fluid adapters are provided with the second part of said connection means and are adapted to be releasably fitted to the one or more secondary fluid inlets and/or the fluid outlet, and in which the primary fluid inlet is provided with the second part of said connection means and is adapted to be releasably fitted to the fluid outlet of another manifold body with which it is usable.

(The term "connection means" used above does not refer to a single means comprising just one male part and one female part. It is intended that this term should refer to a type of connection means in which any male connector of that type can connect to any female connector of that type.)

Therefore, the invention provides a manifold body which can use the same fluid adapters to connect to chemical lines and an output line. Further, those adapters can be fitted directly to the manifold body without the need of any further fixture components. In addition, the invention provides a manifold body which can connect directly to another of the same construction, so a composite manifold apparatus can be constructed with any number of manifold bodies, and therefore any number of secondary fluid inlets.

It will be appreciated that the connection means can be any known type of connector system, however in a preferred construction the connection means comprises a bayonet connector. The first part of the connection means can comprise the slot part of the bayonet connector, and second part can comprise the pin part of the bayonet connector.

Preferably the first part of the bayonet connector can comprise a connector body with an annular opening provided with a pair of opposed L-shaped slots, and the second part of the bayonet connector can comprise an annular boss adapted to fit axially into the annular opening and be rotatable therein. Further the annular boss can be provided with a pair of pins on an outer surface thereof adapted to fit into the L-shaped slots.

The L-shaped slots can each comprise a circumferentially extending inner section comprising an upper edge and a terminal end. The upper edge can be arranged at an angle to an outer edge of the annular opening, such that the distance between said upper edge and said outer edge of the annular opening increases towards said terminal end, and a pin indent can be provided in said upper edge at said terminal end. As such, when the pins are fitted into the L-shaped slots and the annular boss is rotated, the annular boss is drawn into the annular opening until the pins slot into the pin indents. The position of the L-shaped slots and the pins can be arranged such that an end of the annular boss is forced against an inner end of the annular opening just prior to the position of the pin indents, and the annular boss and/or the connector body can be constructed from a resilient material, such that one or other of the components flexes to allow the pins to travel into the pin indents and be resiliently held therein.

In one construction the circumferentially extending inner section can comprise an aperture formed in the side of the connector body, and each L-shaped slot can further comprise an axially extending inlet section comprising a trough formed in a surface of the annular opening. This particular construction is preferred because it is easier to manufacture.

The connection means can be provided with a fluid seal. The annular boss can be provided with a circumferential slot between the pins and the end of the annular boss, which slot can carry an 0-ring seal.

Preferably the one or more secondary fluid inlets can be provided with non-return valves when a fluid adapter is fitted thereon. In order to facilitate this the one or more secondary fluid inlets can comprise a cylindrical valve chamber disposed inside the annular opening, which is provided with an aperture at an inner end thereof. The fluid adapters can be provided with a valve seat which can be disposed at an outer end of the valve chamber when a fluid adapter is fitted on a secondary fluid inlet. A valve member can be disposed in the valve chamber, which can comprise a ball held against the valve seat by a coil spring, which can be held in compression inside the valve chamber between the secondary fluid inlet and the fluid adapter.

In one construction the manifold apparatus can comprise an inlet adapter comprising the first part of said connection means at a first side thereof, and the first part of a second connection means at a second side thereof. The purpose of the inlet adapter is to allow the manifold body to be fitted to a solenoid valve controlled mains water supply. The inlet adapter can be adapted to be releasably fitted to the primary fluid inlet at said first side.

In order to prevent backflow out of the manifold body the primary fluid inlet can be provided with a non-return valve when the inlet adapter is fitted thereon. In order to facilitate this the annular boss of the second part of the connection means provided at the primary fluid inlet can have a valve chamber therein, which can be provided with an aperture at an inner end thereof. The inlet adapter can be provided with a valve seat which can be disposed at an outer end of the valve chamber when the inlet adapter is fitted to the primary fluid inlet. A valve member can be disposed in the valve chamber, which can comprise a shuttle held against the valve seat by a coil spring, which can be held in compression inside the valve chamber between the primary fluid inlet and the inlet adapter.

The plurality of fluid adapters can each comprise a hose tail adapted to be fitted to a hose line with which the manifold apparatus is used. Preferably the plurality of fluid adapters can comprise fluid adapters with hose tails of different sizes.

In one construction the manifold body can be provided with mounting means adapted to allow it to be mounted to a surface, for example a wall.

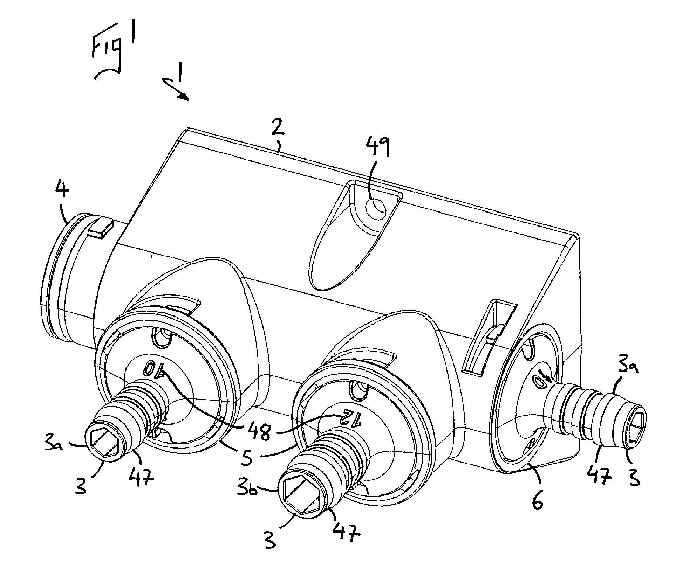

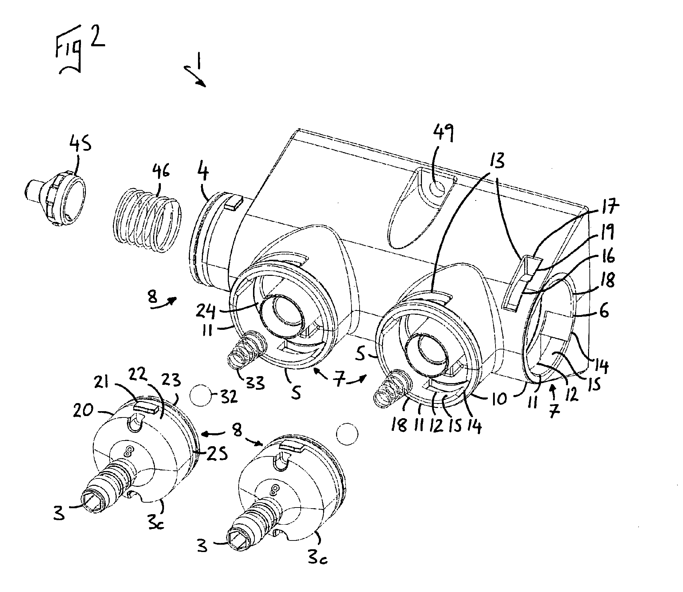

The invention can be performed in various ways but one embodiment will now be described by way of example and with reference to the accompanying drawings, in which:
Figure 1 is a perspective view of manifold apparatus according to the present invention;
Figure 2 is a exploded perspective view of the manifold apparatus as shown in Figure 1;
Figure 3 is a cross-sectional side view of a part of the manifold apparatus as shown in Figure 1; and,
Figure 4 is a perspective view of a composite manifold apparatus comprising manifold apparatus like that shown in Figure 1;
As shown in Figures 1 and 2 a manifold apparatus 1 comprises a manifold body 2 and a plurality of fluid adapters 3 (of which there are three varieties, 3a, 3b and 3c). The manifold body 2 comprises a primary fluid inlet 4, two secondary fluid inlets 5 and a fluid outlet 6. The secondary fluid inlets 5 and the fluid outlet 6 are provided with the first part 7 of a connection means, and the fluid adapters 3 are provided with the second part 8 of said connection means and are adapted to be releasably fitted to the secondary fluid inlets 5 and/or the fluid outlet 6. The primary fluid inlet 4 is provided with the second part 8 of said connection means and is adapted to be releasably fitted to the fluid outlet 6 of another manifold body 2 with which it is usable, as described further below.

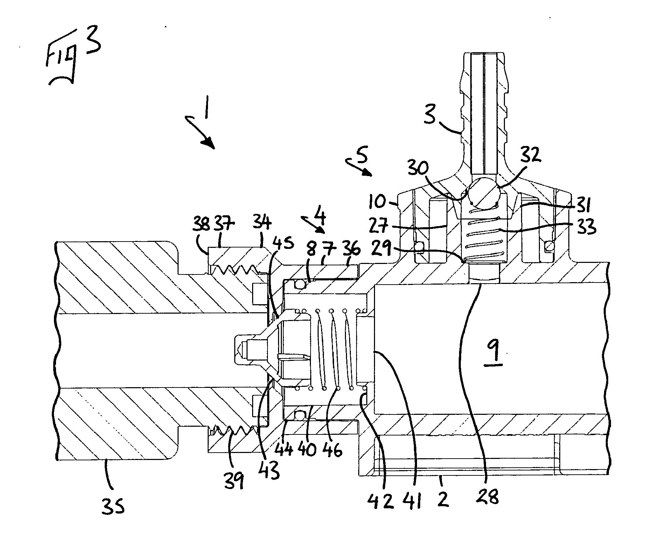

The manifold body 2 comprises a central annular fluid passageway 9 (which is visible in Figure 3) leading from the primary fluid inlet 4 to the fluid outlet 6. Arranged normal to the fluid passageway 9 are the two fluid inlets 5. As such secondary fluids can be pumped into the fluid passageway 9 through the secondary fluid inlets 5, and mixed with a primary fluid passing therethrough, so a fluid mixture can exit the manifold body 2 through the fluid outlet 6.

Referring to Figure 2, the first part 7 of the connection means comprises a connector body 10 with an annular opening 11 provided with a pair of opposed L-shaped slots 12. (In the case of the secondary fluid inlets 5, the connector body 10 is an annular boss which defines the annular opening 11, but in the case of the fluid outlet 6, the annular opening 11 is recessed into the manifold body 2, so the connector body 10 essentially comprises that end of the manifold body 2.)

Each slot 12 comprises a circumferentially extending inner section in the form- of an aperture 13 formed in the side of the connector body 10, and an axially extending inlet section in the form of a trough 14 formed in a surface 15 of the annular opening 11.

The aperture 13 comprises an upper edge 16 and a terminal end 17. The upper edge 16 is arranged at a slight angle to an outer edge 18 of the annular opening 11, such that the distance between said upper edge 16 and said outer edge 18 increases towards said terminal end 17. A pin indent 19 is provided in said upper edge 16 at the terminal end 17. (These particular features are indicated in Figure 2 in relation to the first part of the connection means 7 provided at the fluid outlet 6, as that is where they are most visible in Figure 2, but the same arrangement is provided at each of the first parts of the connection means 7).

The second part 8 of the connection means comprises an annular boss 20 adapted to fit axially into the annular opening 11 and be rotatable therein. The annular boss 20 is provided with a pair of pins 21 (only one of which is visible in Figure 2 ) on an outer surface 22 thereof, which are adapted to fit into the L-shaped slots 12. The pins 21 are situated on the annular boss 20 such that when they travel through the apertures 13, the end 23 of the annular boss 20 is forced against an inner end 24 of the annular opening 11, and the annular boss 20 flexes slightly to allow the pins 21 to travel through the apertures 13 and slot into the pin indents 19, where they are resiliently held in place due to the compression of the annular boss 20. The annular boss 20 is provided with a circumferential trough 25, between the pins 21 and the end 23 of the annular boss 20, which trough 25 carries an 0-ring seal (not shown). (The features of the second part of the connection means 8 are indicated in Figure 2 in relation to the second part of the connection means 8 provided on one of the fluid adapters 3c, but the same arrangement is provided at each of the second parts of the connection means 8.)

The secondary fluid inlets 5 are provided with non-return valves when a fluid adapter 3 is fitted thereon, and these are best explained with reference to Figure 3. The secondary fluid inlets 5 are provided with a cylindrical valve chamber 27 disposed inside the connector body 10, which is provided with an aperture 28 at an inner end 29 thereof. The fluid adapters 3 are provided with a valve seat 30 which is disposed at an outer end 31 of the valve chamber 27 when a fluid adapter 3 is fitted on a secondary fluid inlet 5 as shown in Figure 3. A ball valve 32 is disposed inside the valve chamber 27, and it is held against the valve seat 30 by a coil spring 33, which is held in compression inside the valve chamber 27 between the secondary fluid inlet 5 and the fluid adapter 3.

Still referring to Figure 3, the manifold apparatus 1 further comprises an inlet adapter 34 which is adapted to allow the manifold body 2 to be fitted to a solenoid valve 35. The inlet adapter 34 comprises the first part of the connection means 7 at a first side 36 thereof, so it can be releasably connected to the second part 8 provided at the primary fluid inlet 4. The inlet adapter 34 also comprises the first part 37 of a second connection means at a second side 38 thereof. This second connection means is a screw cap adapted to be releasably fitted to a screw thread 39 provided on the solenoid valve 35. The screw threads used here are a standard fitment size, so the manifold apparatus 1 can be attached to existing plumbing components.

The primary fluid inlet 4 is provided with a non-return valve when the inlet adapter 34 is fitted thereon. The annular boss 20 forming a part of the second part of the connection means 8 provided at the primary fluid inlet 4, defines a valve chamber 40 therein provided with an aperture 41 at an inner end 42 hereof. The inlet adapter 34 is provided with a valve seat 43 which is disposed at an outer end 44 of the valve chamber 40 when the inlet adapter 34 is fitted to the primary fluid inlet 4. A shuttle valve 45 is disposed in the valve chamber 40, and it is held against the valve seat 43 by a coil spring 46, which is held in compression inside the valve chamber 40 between the primary fluid inlet 4 and the inlet adapter 34.

Referring back to Figures 1 and 2, the fluid adapters 3 each comprise a hose tail 47, which is adapted to be fitted to a hose line (not shown) with which the manifold apparatus 1 is used. The hose tails 47 can be different sizes to fit different sizes of hose line. In Figure 1 the two fluid adapters are different sizes, a first 3a having a 10mm sized bore, and a second 3b having a 12mm sized bore. This is indicated by indicia 48 provided on the fluid adapters 3. In Figure 2, the fluid adapters 3c both have an 8mm sized bore. It will be appreciated that the types of fluid adapters used will be determined by the requirements at each individual site, but it is important to note the great ease with which they can be changed if required.

The manifold body 2 is provided with mounting means, in the form of apertures 49, which are adapted to allow it to be mounted to a surface in use, for example a wall.

In use the manifold apparatus 1 is constructed as required for the associated infrastructure, and can be constructed in various ways according to requirements, and in particular according to the number of chemicals to be mixed with water passing through the manifold body 2. If two chemicals are to be mixed with water, the apparatus is arranged as follows.

The inlet adapter 34 is fitted to the primary fluid inlet 4, with the shuttle valve 45 and coil spring 46 inserted between the components. The first part of the connection means 7 provided on the inlet adapter 34 is brought together with the second part of the connection means 8 provided at the primary fluid inlet 4, with the pins 21 aligned with the troughs 14. The pins 21 pass through the troughs 14 and enter the aperture 13, then the inlet adapter 34 is rotated on the annular boss 20 such that the pins 21 travel down the aperture 13. As this occurs, the annular boss 20 is forced further into the annular opening 11 and is compressed, due to the angle of the upper edge 16 of the aperture 13. When the pins 21 reach the terminal end 17 of the aperture 13, they slot into the pin indents 19, and the inlet adapter 34 is held in place on the manifold body 2, as shown in Figure 3.

The inlet adapter 34 is then fitted to solenoid 35, by screwing the screw cap 37 onto the screw thread 39. The solenoid is connected in a known way to a mains water supply.

Two fluid adapters 3 with suitably sized hose tails 47 are then chosen to suit the hose line sizes at the particular site, and fitted to the secondary fluid inlets 5, with ball valves 32 and coil springs 33 inserted between the components. The second part of the connection means 8 provided on each fluid adapter 3 is brought together with one of the first parts of the connection means 7 provided at one of the secondary fluid inlets 5, with the pins 21 aligned with the troughs 14. The pins 21 pass through the troughs 14 and enter the aperture 13, then annular boss 20 is rotated such that the pins 21 travel down the aperture 13. As this occurs, the annular boss 20 is forced further into the annular opening 11 and is compressed, due to the angle of the upper edge 16 of the aperture 13. When the pins 21 reach the terminal end 17 of the aperture 13, they slot into the pin indents 19, and the fluid adapter 3 in question is held in place on the manifold body 2, as shown in Figures 1 and 3.

Chemical supply hose lines (not shown) are then fitted to the fluid adapters 3 as appropriate, by forcing them onto the hose tails 47.

One further fluid adapter 3 with a suitably sized hose tail 47 is then fitted to the fluid outlet 6. The second part of the connection means 8 provided on the fluid adapter 3 is brought together with the first parts of the connection means 7 provided at the fluid outlet 6, with the pins 21 aligned with the troughs 14. The pins 21 pass through the troughs 14 and enter the aperture 13, then annular boss 20 is rotated such that the pins 21 travel down the aperture 13. As this occurs, the annular boss 20 is forced further into the annular opening 11 and is compressed, due to the angle of the upper edge 16 of the aperture 13. When the pins 21 reach the terminal end 17 of the aperture 13, they slot into the pin indents 19, and the fluid adapter 3 is held in place on the manifold body 2.

A hose line to an associated washing machine (not shown) is then fitted to the fluid adapter 3, by forcing it onto the hose tail 47.

The completed arrangement can then be fitted to a wall or other suitable surface using bolts passed through the apertures 49.

When constructed as described above, 0 ring seals (not shown) are fitted in the troughs 25 on the annular bosses 20, to ensure that the solenoid 35 and the various hose lines (not shown) are connected in a sealed manner to the manifold body 2.

In use the associated washing machine may need a supply of water, or a mixture of water and one or more chemicals, at different times. If only water is required, the solenoid 35 is operated to allow water to enter the manifold body 2. The water is provided at sufficient pressure to force the shuttle valve 45 off the valve seat 43 against the force of the coil spring 46, thereby allowing water to pass. The water then travels through the fluid passageway 9 and out through the fluid adapter 3 provided at the fluid outlet 6. No passing water can enter the chemical hose lines (not shown) due to the presence of the non-return ball valves 32.

When one or more chemicals need to be mixed with the passing water, associated pumps (not shown) pump the chemicals down the chemical hose lines (not shown) into one or both of the fluid adapters 3 fitted to the secondary fluid inlets 5. The chemicals are pumped with sufficient pressure to force the ball valves 32 off the valve seats 30 against the force of the coil springs 33, thereby allowing the chemical substance to pass. Once in the fluid passageway 9, the chemical substances mix with the water, and the mixture travels out through the fluid adapter 3 provided at the fluid outlet 6.

If only one chemical substance is introduced to the manifold body in this way, the resulting mixture cannot enter the other chemical hose line (not shown) due to the presence of the non-return ball valve 32.

In the event that a chemical substance is pumped into the manifold body when the solenoid has not opened to allow water to enter, then the chemical substance cannot enter the solenoid 35 due to the presence of the non-return shuttle valve 45. In addition, if water, a chemical substance or a mixture remains inside the manifold body 2 after use, it cannot enter either the solenoid 35 or the chemical supply hose lines (not shown) due to the presence of all the non-return valves.

If during the life of the manifold apparatus 1 a different chemical substance has to be used which requires a larger hose line, and subsequently a fluid adapter 3 with a larger hose tail 47 than is currently fitted, it is a simple matter to change one fluid adapter 3 for another one. The fluid adapter 3 which is no longer required is pushed inwards and rotated anti-clockwise to release it from the manifold body 2, in a reverse of the above described process. A replacement fluid adapter 3 can then be fitted as described above.

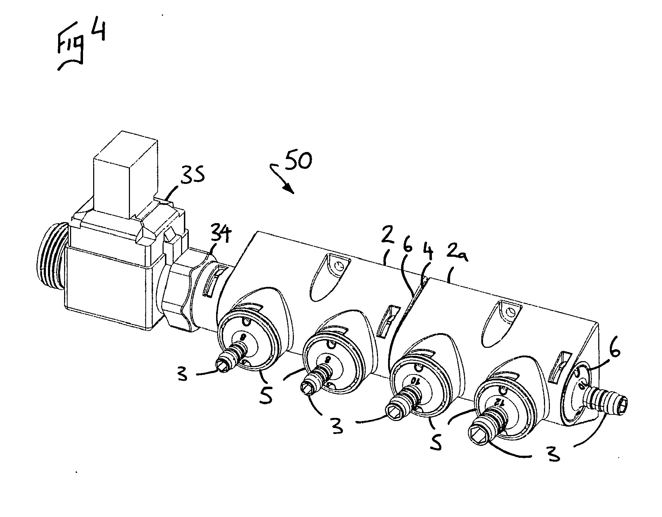

The above described arrangement is obviously suitable if one or two chemicals have to be mixed with water and provided to an associated washing machine. However, the manifold body 2 is also adapted to form a part of a larger manifold apparatus if required, and such an arrangement is shown in Figure 4.

In Figure 4 two manifold bodies 2 and 2a are fitted together to form a manifold apparatus 50 with four secondary fluid inlets 5. To fit the two manifold bodies 2 and 2a together, the second part of the connection means 8 provided at the primary fluid inlet 4 of manifold body 2a is brought together with the first part of the connection means 7 provided at the fluid outlet 6 of manifold body 2, with the pins 21 aligned with the troughs 14. The pins 21 pass through the troughs 14 and enter the aperture 13, then annular boss 20 is rotated such that the pins 21 travel down the aperture 13. As this occurs, the annular boss 20 is forced further into the annular opening 11 and is compressed, due to the angle of the upper edge 16 of the aperture 13. When the pins 21 reach the terminal end 17 of the aperture 13, they slot into the pin indents 19, and manifold body 2a is held in place on manifold body 2.

As such, the manifold bodies 2 and 2a form a single manifold body with a fluid passageway 9 and four secondary fluid inlets 5. It will be appreciated that it is possible to connect any number of manifold bodies together to create a single manifold body with any number of secondary fluid inlets 5.

With regard to manifold apparatus 50, once the manifold bodies 2 and 2a have been connected together, the inlet adapter 34 and five fluid adapters 3 are connected thereto in the same manner as described above in relation to manifold apparatus 1. The manifold apparatus 50 is then connected to the solenoid 35, and chemical hose lines (not shown) are connected to the hose tails 47 of the fluid adapters 3 fitted to the secondary fluid inlets 5, and a hose line to an associated washing machine (not shown) is connected to the hose tail 47 of the fluid adapter 3 fitted to the fluid outlet 6 of manifold body 2a.

The fluid adapters 3 are chosen such that their hose tails 47 are the correct size for the associated hose lines (not shown). In the case of manifold body 50, the first two secondary fluid inlets are provided with fluid adapters with 8mm bores, the third secondary fluid inlet is provided with a fluid adapter with a 10mm bore, and the fourth secondary fluid inlet is provided with a fluid adapter with a 12mm bore. The fluid outlet 6 is provided with a fluid adapter with a 10mm bore.

In use the manifold apparatus 50 operates in the same manner as manifold apparatus 1 described above, except that more chemical substances can be mixed with the water travelling through the fluid passageway 9.

It will be appreciated that the fluid adapters 3 can be readily changed if required, as with manifold apparatus 1, but also that manifold body 2a can easily be removed if no longer required, or a further manifold body can easily be added if required.

In addition to this, it is also possible to fit a manifold body 2 to a secondary fluid inlet 5, because the second part of the connection means 8 provided at the primary fluid inlet 4 can be fitted to the first part of the connection means 7 provided at each secondary fluid inlet 5. Such an arrangement may be suitable if space is particularly limited, and there is insufficient room to accommodate a long manifold apparatus like that shown in Figure 3. If such an arrangement were necessary two manifold bodies are capable of providing three secondary fluid inlets, but it would require three manifold bodies to provide four secondary fluid inlets, with two in parallel connected to the secondary fluid inlets of a third.

The above described embodiments can be altered without departing from the scope of Claim 1. For example, in other alternative embodiments (not shown) the manifold bodies comprise different numbers of secondary fluid inlets. In particular, in one alternative embodiment (not shown) the manifold body comprises only one secondary fluid inlet, and when a plurality of chemical substances need to be mixed with water a number of manifold bodies are connected together. In another alternative embodiment (not shown) the manifold bodies comprise three secondary fluid inlets. In yet other alternative embodiments (not shown) a plurality of manifold bodies are provided which have different numbers of secondary fluid inlets provided thereon to provide the maximum flexibility.

Therefore, the invention provides a manifold body which uses the same fluid adapters to connect to chemical lines and an output line. Further, those adapters can be fitted directly to the manifold body without the need of any further fixture components. In addition, the invention provides a manifold body which can connect directly to another of the same construction, so a composite manifold apparatus can be constructed with any number of manifold bodies, and therefore any number of secondary fluid inlets.

## Claims

1. Manifold apparatus comprising a manifold body and a plurality of fluid adapters, in which the manifold body comprises a primary fluid inlet, one or more secondary fluid inlets and a fluid outlet, in which the one or more secondary fluid inlets and the fluid outlet are provided with the first part of a connection means, in which the plurality of fluid adapters are provided with the second part of said connection means and are adapted to be releasably fitted to the one or more secondary fluid inlets and/or the fluid outlet, and in which the primary fluid inlet is provided with the second part of said connection means and is adapted to be releasably fitted to the fluid outlet of another manifold body with which it is usable.

2. Manifold apparatus as claimed in Claim 1 in which the connection means comprises a bayonet connector.

3. Manifold apparatus as claimed in Claim 2 in which the first part of the connection means comprises the slot part of the bayonet connector, and in which the second part of the connection means comprises the pin part of the bayonet connector.

4. Manifold apparatus as claimed in Claim 3 in which the first part of the bayonet connector comprises a connector body with an annular opening provided with a pair of opposed L-shaped slots, in which the second part of the bayonet connector comprises an annular boss adapted to fit axially into the annular opening and be rotatable therein, in which the annular boss is provided with a pair of pins on an outer surface thereof adapted to fit into the L-shaped slots.

5. Manifold apparatus as claimed in Claim 4 in which the L-shaped slots each comprise a circumferentially extending inner section comprising an upper edge and a terminal end, in which said upper edge is arranged at an angle to an outer edge of the annular opening such that the distance between said upper edge and said outer edge of the annular opening increases towards said terminal end, and in which a pin indent is provided in said upper edge at said terminal end.

6. Manifold apparatus as claimed in Claim 5 in which the circumferentially extending inner section comprises an aperture formed in the side of the connector body, and in which each L-shaped slot further comprises an axially extending inlet section comprising a trough formed in a surface of the annular opening.

7. Manifold apparatus as claimed in Claim 6 in which the annular boss is provided with a circumferential slot between the pins and an end of the annular boss, which slot carries an 0-ring seal.

8. Manifold apparatus as claimed in any of the preceding Claims in which the one or more secondary fluid inlets are provided with non-return valves when a fluid adapter is fitted thereon.

9. Manifold apparatus as claimed in Claim 8 when dependent on any of Claims 4 to 7, in which the one or more secondary fluid inlets comprise a cylindrical valve chamber disposed inside the annular opening, and provided with an aperture at an inner end thereof, in which the fluid adapters are provided with a valve seat which is disposed at an outer end of the valve chamber when a fluid adapter is fitted on a secondary fluid inlet, and in which a valve member is disposed in the valve chamber.

10. Manifold apparatus as claimed in Claim 9 in which the valve member comprises a ball held against the valve seat by a coil spring, in which the coil spring is held in compression inside the valve chamber between the secondary fluid inlet and the fluid adapter.

11. Manifold apparatus as claimed in any of the preceding Claims in which the manifold apparatus further comprises an inlet adapter comprising the first part of said connection means at a first side thereof, and the first part of a second connection means at a second side thereof, in which the inlet adapter is adapted to be releasably fitted to the primary fluid inlet at said first side.

12. Manifold apparatus as claimed in Claim 11 in which the primary fluid inlet is provided with a non-return valve when the inlet adapter is fitted thereon.

13. Manifold apparatus as claimed in Claim 12 when dependent on any of Claims 4 to 7 or 9 or 10, in which the annular boss forming a part of the primary fluid inlet forms a valve chamber therein which is provided with an aperture at an inner end thereof, in which the inlet adapter is provided with a valve seat which is disposed at an outer end of the valve chamber when the inlet adapter is fitted to the primary fluid inlet, and in which a valve member is disposed in the valve chamber.

14. Manifold apparatus as claimed in Claim 13 in which the valve member comprises a shuttle held against the valve seat by a coil spring, in which the coil spring is held in compression inside the valve chamber between the primary fluid inlet and the inlet adapter.

15. Manifold apparatus as claimed in any of Claims 11 to 14 in which the inlet adapter is adapted to fit to a solenoid valve device with which the manifold apparatus is used, at its second side thereof.

16. Manifold apparatus as claimed in any of the preceding Claims in which the plurality of fluid adapters each comprise a hose tail adapted to be fitted to a hose line with which the manifold apparatus is used.

17. Manifold apparatus as claimed in Claim 16 in which the plurality of fluid adapters comprise fluid adapters with hose tails of different sizes.

18. Manifold apparatus as claimed in any of the preceding Claims in which the manifold body is provided with mounting means adapted to allow it to be mounted to a surface.

19. Manifold apparatus substantially as described herein and as shown in the Figures.
